# EUROPEAN PATENT SPECIFICATION

(11) **EP 1 548 136 B1**
(45) Date of publication and mention of the grant of the patent: **19.03.2008**
(21) Application number: 04445125.0
(22) Date of filing: 08.12.2004
(51) Int. Cl.: C22C 29/00

(54) **Cemented carbide insert and method of making the same**
Sinterkarbideinsatz und Method zu dessen Herstellung.
Plaquette en carbure cémenté et son procédé de fabrication

(30) Priority: 15.12.2003 SE 0303360; 22.12.2003 SE 0303487
(43) Date of publication of application: 29.06.2005
(73) Proprietor: Sandvik Intellectual Property AB, 811 81 Sandviken (SE)
(72) Inventor: Collin, Marianne, 128 38 Skarpnäck (SE); Norgren, Susanne, 141 41 Huddinge (SE)
(74) Representative: Weber, Roland

(56) References cited:
- EP-A- 0 257 869
- EP-A- 0 344 421
- EP-A- 0 438 916
- EP-A- 0 499 223
- EP-A- 0 687 744
- US-A- 5 623 723
- US-A- 5 856 626

## Description

The present invention relates to a cemented carbide tool for metal cutting or metal forming made via sintering techniques. More specifically, the invention pertains to a cemented carbide tool that is made via sintering techniques wherein there are two distinct microstructural zones having complementary properties.

In cemented carbides the grain size, as well as the binder phase (e.g., cobalt) content each has an influence on the performance of the composite. For example, a smaller or finer grain size of the tungsten carbide results in a more wear resistant material. An increase in cobalt content typically leads to an increase in toughness.

Cemented carbides having a fine grain size are produced through the incorporation of grain refiners in the initial powder blend. Such cemented carbide has a fine grain size throughout its microstructure. Cemented carbide with a coarse grain size is produced via sintering without the incorporation of any grain refiners since the tendency of a cemented carbide like a WC-Co composite is for the WC grains to coarsen during sintering. Such cemented carbide has a coarse grain size throughout its microstructure. As can be appreciated these hard bodies have a uniform microstructure throughout.

Cemented carbide products are widely used in tools for metal machining as well as for different coldforming operations of materials like steels, copper alloys, composite materials, etc. Examples of the latter type of tools are wire drawing dies, which are a cemented carbide nib usually fit into a steel or metal holder. Such tools should have a hard and wear resistant surface zone which also should have the following additional properties: good thermal conductivity; low coefficient of friction, i.e., it may be self lubricating or assist lubrication with a coolant; good corrosion resistance; resistance to microcracking; and high toughness.

Cemented carbide bodies having at least two distinct microstructural zones are known in the art. For example drills having a core of a tough cemented carbide grade and a cover of a more wear resistant grade are disclosed in EP-A-951576.

EP-A-194018 relates to a wire drawing die made from a central layer with coarse grained tungsten carbide particles and a peripheral layer with finer grained tungsten carbide particles. Initially, the layers have the same content of cobalt. After sintering, the coarse grained layer in the center is reduced in cobalt content.

EP-A-257869 discloses a rock bit button made with a wear resistant tip portion and a tough core. The tip portion is made from a powder with low Co-content and a fine WC grain size and the core portion is made from a powder with high Co content and coarse WC grains. Nothing is disclosed about the Co-content in the two portions after sintering. However, also in this case the Co-content in the coarse grained portion will be reduced at the benefit of the Co-content in the fine grained layer. A similar disclosure is found in US 4,359,335.

An alternative approach is disclosed in US 4,843,039 which discloses cemented carbide bodies preferably for cutting tool inserts for metal machining. The bodies comprise a core of cemented carbide containing eta-phase surrounded by a surface zone of cemented carbide free of eta-phase and having a low content of cobalt in the surface and a higher content of cobalt next to the eta-phase zone. US 4,743,515 is similar, but it relates to rock drilling and mineral cutting.

US 5,623,723 discloses a method of making a cemented carbide body with a wear resistant surface zone. The method includes the following steps: providing a compact of cemented carbide; placing a powder of grain refiner on at least one portion of the exposed surface of the compact; and heat treating the compact and grain refiner powder so as to diffuse the grain refiner toward the center of the green compact thereby forming a surface zone inwardly from the exposed surface in which the grain refiner was placed, and forming an interior zone. As a result, a cemented carbide body is obtained with a surface zone having a grain size that is smaller but with a Co-content that is higher than that of the interior portion of the body. This means that the increased wear resistance that is obtained as a result of the smaller WC grain size is to a certain extent lost by the increase in Co-content.

It is therefore an object of the present invention to provide a cemented carbide tool with a surface zone with low binder phase content and fine WC grain size and thus high wear resistance and a method of making the same.

It has now surprisingly been found that it is possible from a single mixture of tungsten carbide and binder phase to obtain a cemented carbide body with a surface portion with a smaller grain size and lower cobalt content than those in the interior portion.
Figure 1 is a graph showing hardness (HV3) and cobalt content versus distance from the edge in an insert according to the invention.
Figure 2 is a graph showing chromium content versus distance from the edge in an insert according to the invention.
Figure 3 is a micrograph showing the microstructure at a distance of 100 µm from the edge (FEG-SEM, 20000X, BSE mode) in an insert according to the invention.
Figure 4 is a micrograph showing the microstructure at a distance of 3 mm from the edge (FEG-SEM, 20000X, BSE mode) in an insert according to the invention.
Figure 5 is a graph showing the cobalt content versus the distance to the previously Cr₃C₂-covered surface and also the chromium content versus the distance to the previously Cr₃C₂-covered surface in another embodiment of the invention.
Figure 6 is a micrograph showing the microstructure at a distance of 100 µm from the surface where the Cr₃C₂-powder was placed (FEG-SEM, 15000X, BSE mode).
Figure 7 is a micrograph showing the microstructure at a distance of 3 mm from the surface where the Cr₃C₂-powder was placed (FEG-SEM, 15000X, BSE mode.)

According to the present invention there is provided a cemented carbide tool for metal cutting or metal forming comprising hard constituents in a binder phase of Co and/or Ni comprising at least one surface portion, 0-2000 µm thick, preferably 5-1200 µm, more preferably 10-800 µm, most preferably 10-300 µm and an interior portion in which surface portion the grain size is smaller than in the interior portion and the binder phase content is lower than that in the interior portion and the Cr-content is higher than that in the interior portion. More particularly the binder phase content of the surface portion is <1, preferably <0.92, more preferably <0.85, of the binder phase content in the interior portion and the WC grain size of the surface portion is <1, preferably <0.9, more preferably <0.8, of the WC grain size in the interior portion. Preferably the surface portion contains Cr such that the ratio between the parameter A=((wt-% Cr/wt-% binder phase)+0.01) in the surface portion and the parameter B=((wt-% Cr/wt-% binder phase)+0.01) taken at the part of the body that is characterized by the lowest Cr content is A/B >1.5, preferably A/B>3.0.

In a first embodiment the WC grain size of the surface zone is submicron.

In a second embodiment the WC grain size of the interior portion is 1-3 µm.

In a third embodiment the composition of the cemented carbide is WC+Co with a binder phase content >1.5 wt-%, preferably >5 wt-%, but <25 wt-%, preferably <15 wt-%.

In a fourth embodiment the cemented carbide in addition contains 0-30, preferably 0.2-16, most preferably 0.4-9 vol-% γ-phase.

In a fifth embodiment the cemented carbide tool is a cutting tool insert for metal machining. It is obvious to the man skilled in the art that the invention can be applied to other cemented carbide cutting tools, such as endmills and drills.

In a sixth embodiment the cemented carbide tool is a coldforming tool. Other examples of use of cemented carbide in forming applications are from such variable fields as the forming of beverage cans, bolts, nails and other applications known to the person skilled in the art.

All these embodiments can contain grain refiners such as VC and Cr₃C₂.

The cemented carbide tool may further be provided with a wear resistant coating as known in the art, preferably 1-40 µm thick, more preferably 1-15 µm thick.

The present invention also relates to a method of making a cemented carbide body for metal cutting or metal forming, such as a cutting tool insert for chip forming machining or a coldforming tool, with a wear resistant surface zone, including the following steps:
- providing a compact of cemented carbide made from one single powder comprising powders forming hard constituents, possibly grain refiners such as VC and Cr₃C₂, and binder phase of Co and/or Ni;
- placing a powder of grain refiner on at least one portion of the exposed surface of the compact by dipping, spraying painting, applying a thin tape or in any other way; the grain refiner, preferably being any chromium carbide (Cr₃C₂, Cr₂₃C₆ and Cr₇C₃ or mixtures of these) or a mixture of chromium and carbon or other compounds containing chromium and carbon and/or nitrogen.
- sintering the compact and grain refiner powder so as to diffuse the grain refiner away from the surface(s) of grain refiner application thereby forming a gradient zone characterized of lower cobalt content, higher chromium content and lower WC grain size compared to the interior portion;
- possibly adding an isostatic gas pressure during the final stage of sintering to obtain a dense body;
- possibly reducing the thickness of the surface portion using grinding or any other mechanical method;
- possibly removing undesired carbides and graphite from the surface using grinding or any other mechanical method;
- possibly depositing a wear resistant coating as known in the art;
- in case of the tool being a cutting insert, possibly performing an edge treatment as known in the art.

The carbon content of the cemented carbide compact shall be determined out of consideration for the carbon contribution from the applied chromium carbide. In the case of γ-phase containing cemented carbide, the chromium solubility in the γ-phase has to be compensated for. Also compacts that would result in an eta-phase containing microstructure can be used. The sintering shall be performed for optimal time to obtain the desired structure and a body with closed porosity, preferably a dense body. This time depends on the grain size of WC and the composition of the cemented carbide and can therefore not be closer defined. It is within the purview of the person skilled in the art to determine whether the requisite structure has been obtained and to modify the sintering conditions in accordance with the present specification. If necessary the body can be post-HIP-ed at a lower HIP-temperature compared to the sintering temperature and at a pressure of 1-100 MPa.

Alternatively, the grain refiner powder is placed on a sintered body which is subsequently heat treated to obtain the desired structure at a temperature higher than that for presintering.

### Example 1

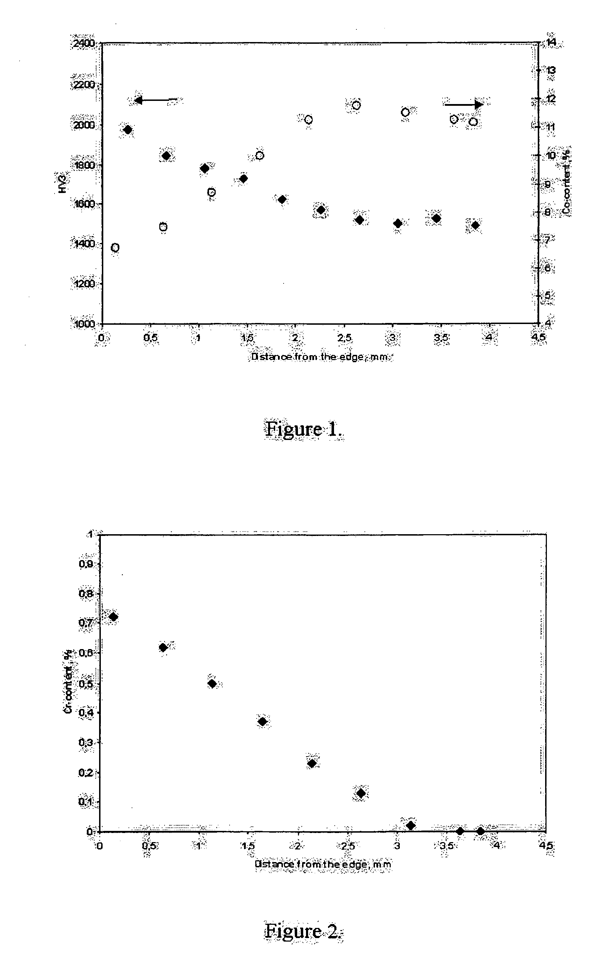

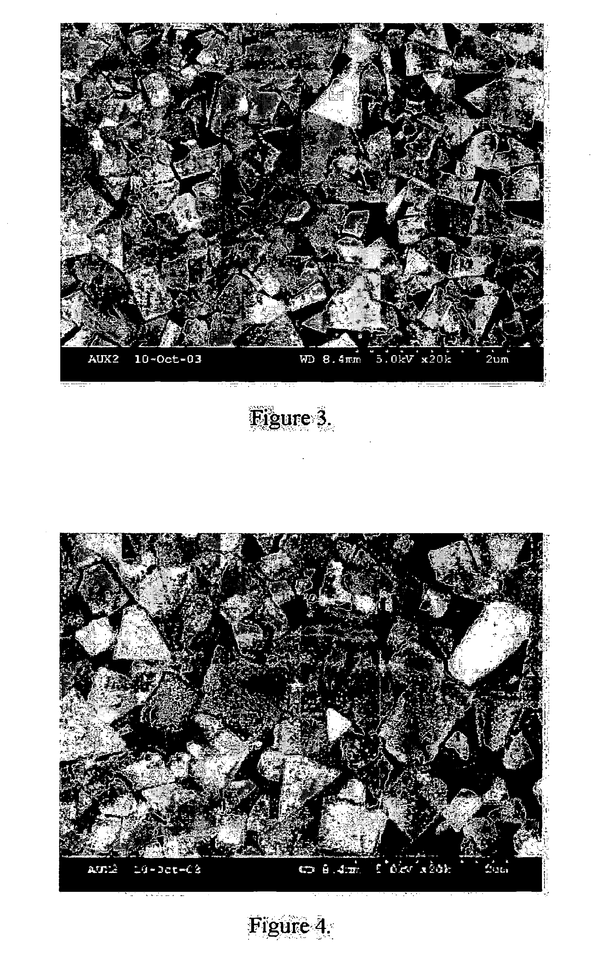

Cemented carbide pressed compacts in the style B-SNGN120408 were made according to the following: Green compacts were pressed from a powder with the composition of 90 weight-% WC and 10 weight-% Co. The WC raw material was fine-grained with an average grain size of 0.25 µm (FSSS). The rake faces were covered with a Cr₃C₂ containing thin layer (0.02 g Cr₃C₂/cm²). Thereafter the compacts were sintered at 1370°C for 30 minutes whereafter the outer 1 mm deep portion was removed by grinding. A cross-section of a sintered and ground blank was examined. Figure 1 shows a graph of hardness and cobalt content versus the distance from the edge. The cobalt content is lowest close to the edge and increases with increasing distance while the hardness is highest close to the edge and decreases with the distance. Figure 2 shows a graph of chromium content versus the distance from the edge. The chromium content is highest close to the edge and decreases with the distance. Cobalt and chromium contents were measured using EPMA (electron probe microanalyser). Figure 3 is a micrograph showing the microstructure at a distance of 100 µm from the edge (FEG-SEM, 20000X, BSE mode). Figure 4 is a micrograph showing the microstructure at a distance of 3 mm from the edge (FEG-SEM, 20000X, BSE mode). The WC-grain size 100 µm from the edge and 3 mm from the edge was measured as 0.28 µm and 0.36 µm respectively (arithmetic mean of linear intercept values).

### Example 2

Cemented carbide pressed compacts in the style B-SNGN120408 were made according to the following: Green compacts were pressed from a powder with the composition of 94 weight-% WC and 6 weight-% Co. The WC raw material was relatively fine-grained with an average grain size of 0.25 µm (FSSS). The rake faces were covered with 0.007 g/cm² Cr₃C₂.

The pressed compacts with Cr₃C₂-layers were sintered at 1350°C for 30 minutes and post-HIP-ed at 1300°C and 6 MPa for 30 minutes. A cross-section of a sintered blank was examined. No Cr₃C₂ was observed on the surface. The following table shows HV3, cobalt-content, chromium-content and WC grain size for this example:

| | |
|---|---|
| HV3 100 µm from the edge | 1720 |
| HV3 3 mm from the edge | 1520 |
| | |
| Co-content 100 µm from the edge, wt-% | 4.0 |
| Co-content 3 mm from the edge, wt-% | 6.5 |
| | |
| Cr-content 100 µm from the edge, wt-% | 0.7 |
| Cr-content 3 mm from the edge, wt-% | <0.05 |
| | |
| WC grain size 100 µm from the edge, µm | 0.7 |
| WC grain size 3 mm from the edge, µm | 0.9 |

### Example 3

Cemented carbide pressed compacts in the style B-SNGN120408 were made according to the following: Green compacts were pressed from a powder with the composition of 90 weight-% WC and 10 weight-% Co. The rake faces were covered with a Cr₃C₂ containing thin layer (0.01 g Cr₃C₂/cm²). Thereafter the compacts were sintered at 1370°C for 30 minutes. A cross-section of a sintered blank was examined. No Cr₃C₂ was observed on the surface. The following table shows HV3, cobalt-content, chromium-content and WC grain size for this example:

| | |
|---|---|
| HV3 100 µm from the edge | 1450 |
| HV3 3 mm from the edge | 1280 |
| | |
| Co-content 100 µm from the edge, wt-% | 7.5 |
| Co-content 3 mm from the edge, wt-% | 11 |
| | |
| Cr-content 100 µm from the edge, wt-% | 0.4 |
| Cr-content 3 mm from the edge, wt-% | <0.05 |
| | |
| WC grain size 100 µm from the edge, µm | 1.1 |
| WC grain size 3 mm from the edge, µm | 1.4 |

### Example 4

Cemented carbide pressed compacts in the style B-SNGN120408 were made according to the following: Green compacts were pressed from a powder with the composition of 90 weight-% WC and 10 weight-% Co. The WC raw material was fine-grained with an average grain size of 0.25 µm (FSSS). The rake faces were covered with a Cr₃C₂ containing thin layer (0.018 g Cr₃C₂/cm²). Thereafter the compacts were sintered at 1410°C for 60 minutes. A cross-section of a sintered blank was examined. No Cr₃C₂ was observed on the surface. The following table shows HV3, cobalt-content, chromium-content and WC grain size for this example:

| | |
|---|---|
| HV3 100 µm from the edge | 1750 |
| HV3 4 mm from the edge | 1480 |
| | |
| Co-content 100 µm from the edge, wt-% | 9.0 |
| Co-content 4 mm from the edge, wt-% | 10.5 |
| | |
| Cr-content 100 µm from the edge, wt-% | 0.5 |
| Cr-content 4 mm from the edge, wt-% | 0.1 |
| | |
| WC grain size 100 µm from the edge, µm | 0.32 |
| WC grain size 4 mm from the edge, µm | 0.58 |

### Example 5

Cemented carbide pressed compacts in the style B-SNGN120408 were made according to the following: Green compacts were pressed from a powder with the composition of 94 weight-% WC and 6 weight-% Co. The WC raw material was submicron. The pressed compacts were sintered at 1370°C. The sintered blanks were ground into style SNKN1204 EN and covered with a thin Cr₃C₂-containing tape (0.01 g/cm²) on the clearance face and resintered at a sintering temperature of 1390°C for 15 minutes. A cross-section of a sintered blank was examined. No Cr₃C₂ was observed on the surface. The following table shows HV3, cobalt-content, chromium-content and WC grain size for this example:

| | |
|---|---|
| HV3 100 µm from the edge | 1820 |
| HV3 3 mm from the edge | 1700 |
| | |
| Co-content 100 µm from the edge, wt-% | 5.0 |
| Co-content 3 mm from the edge, wt-% | 6.5 |
| | |
| Cr-content 100 µm from the edge, wt-% | 0.22 |
| Cr-content 3 mm from the edge, wt-% | <0.05 |
| | |
| WC grain size 100 µm from the edge, µm | 0.4 |
| WC grain size 3 mm from the edge, µm | 0.6 |

### Example 6

Cemented carbide pressed compacts in the style B-SNGN120408 were made according to the following: Green compacts were pressed from a powder with the composition of 77 weight-% WC, 6 weight-% TaC, 2 weight-% NbC, 4 weight-% TiC and 11 weight-% Co. The compacts were covered with a thin Cr₃C₂-containing tape (0.02 g/cm²) and sintered at a sintering temperature of 1370°C for 30 minutes and thereafter HIP-ed at 1200°C and 100 MPa for 60 minutes. A cross-section of a sintered blank was examined. The cobalt content and the WC grain size was significantly lower close to the edge compared to the interior as was verified through the following HV3 values.

| | |
|---|---|
| HV3 100 µm from the edge | 1470 |
| HV3 3 mm from the edge | 1300 |

### Example 7

Inserts were produced according to the following:
Composition: 91.6 weight-% WC + 0.23 weight-% TaC + 0.16 weight-% NbC + 8.0 weight-% Co
Style: CNMG120408-QM
Sintering temperature: 1370°C

The inserts were given a rounded cutting edge and thereafter split into two variants. Variant A was covered with Cr₃C₂ on the rake face according to the invention using a painting technique (0.01 g/cm²). Variant B was not covered with Cr₃C₂.

For the rest of the manufacturing the two variants were dealt with together and in the same way involving resintering at 1390°C for 15 minutes, blasting, cleaning and coating with a 4 µm thick TiAlN PVD-layer. Cross-sections of each variant were examined. No Cr₃C₂ was observed between the TiAlN-layer and the cemented carbide material on Variant A. The following table shows cobalt-content, chromium-content and WC grain size for this example:

| | Variant A | Variant B |
|---|---|---|
| Co-content 100 µm from the edge, wt-% | 7.0 | 8.0 |
| Co-content 3 mm from the edge, wt-% | 8.5 | 8.0 |
| | | |
| Cr-content 100 µm from the edge, wt-% | 0.2 | <0.05 |
| Cr-content 3 mm from the edge, wt-% | <0.05 | <0.05 |
| | | |
| WC grain size 100 µm from the edge, µm | 0.55 | 0.7 |
| WC grain size 3 mm from the edge, µm | 0.7 | 0.7 |

The inserts were tested in a specially designed facing operation in order to compare the resistance to plastic deformation according to the following:
Workpiece: Inconel 718
Cutting depth: 1 mm
Feed: 0.25 mm/rev
Cutting speed: 80-140 m/min
Result (maximum cutting speed for keeping plastic deformation below 0.25 mm):
   Variant A: 120 m/min
   Variant B: 100 m/min
These results indicate that treatment of variant A according to the invention gives the best resistance to plastic deformation.

### Example 8

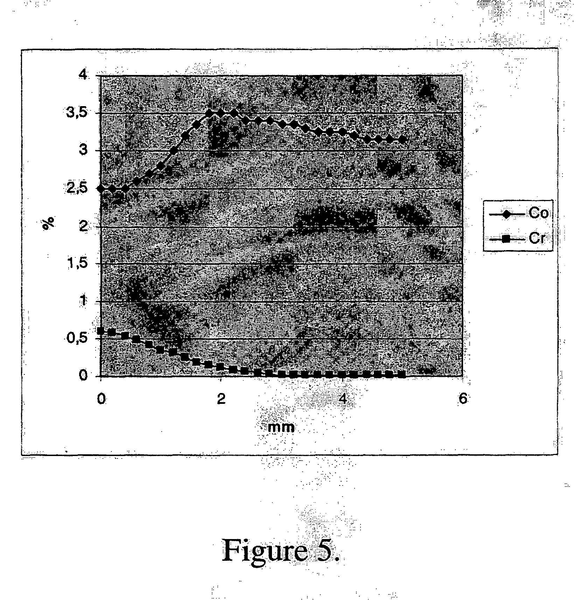

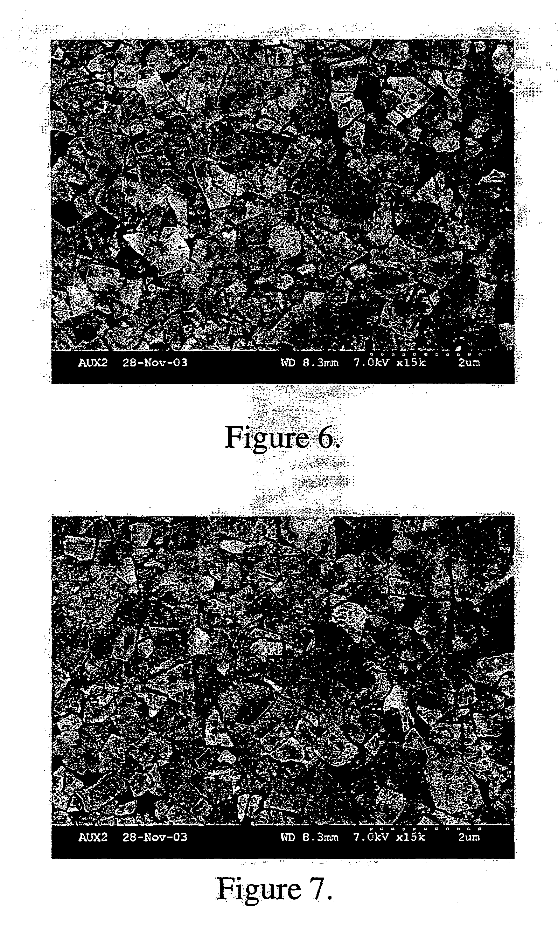

Cemented carbide pressed compacts were made according to the following: A cylindrical green compact were pressed from a powder with the composition of 96.7 weight-% WC and 3.3 weight-% Co and 0.2% VC. The WC raw material was relative fine-grained with an average grain size of 0.8 µm (FSSS). One surface was covered with a Cr₃C₂ containing thin layer (0.02 g Cr₃C₂/cm²). Thereafter the compacts were sintered at 1370°C for 30 minutes. A cross-section of the sintered body was examined. Cobalt and chromium contents were measured using EPMA (electron probe microanalyser). Figure 5 is a graph showing cobalt content versus the distance from the previously Cr₃C₂-covered surface. The cobalt content is lowest close to the surface and increases with increasing distance showing a tendency to formation of a Co richer zone between the surface and the bulk. Figure 5 also shows the chromium content versus the distance from the previously Cr₃C₂-covered surface. The chromium content is highest close to the surface and decreases with the distance. Figure 6 is a micrograph showing the microstructure at a distance of 100 µm from the surface where the Cr₃C₂ powder was placed (FEG-SEM, 15000X, BSE mode). Figure 7 is a micrograph showing the microstructure at a distance of 3 mm from the surface where the Cr₃C₂ powder was placed (FEG-SEM, 15000X, BSE mode.) The following values show cobalt-content, chromium-content and WC grain size. The WC-grain size measured as arithmetic mean of intercept values.

| | |
|---|---|
| Co-content 100 µm from the surface, wt-% | 2.6 |
| Co-content 3 mm from the surface, wt-% | 3.3 |
| | |
| Cr-content 100 µm from the surface, wt-% | 0.6 |
| Cr-content 3 mm from the surface, wt-% | <0.05 |
| | |
| WC grain size 100 µm from the surface, µm | 0.35 |
| WC grain size 3 mm from the surface, µm | 0.44 |

## Claims

1. Cemented carbide tool for metal cutting or metal forming comprising hard constituents of tungsten carbide (WC) in a binder phase of Co and/or Ni and having at least one surface portion and an interior portion wherein
in the surface portion the grain size of the WC hard constituents is smaller than in the interior portion,
in the surface portion the binder phase content is lower than in the interior portion, and
in the surface portion the chromium content is higher than in the interior portion.

2. Cemented carbide tool according to the preceding claim **characterized in that** the binder phase content of the surface portion is <1, preferably <0.92, more preferably <0.85, of that in the interior portion.

3. Cemented carbide tool according to any of the preceding claims **characterized in that** the WC grain size of the surface portion is <1, preferably <0.9, more preferably <0.8, of that in the interior portion.

4. Cemented carbide tool according to any of the preceding claims **characterized in that** the surface portion contains Cr such that the ratio between the parameter A=((wt-% Cr/wt-% binder phase)+0.01) in the surface portion and the parameter B=((wt-% Cr/wt-% binder phase)+0.01) taken at the part of the body that is **characterized by** the lowest Cr content is A/B >1.5, preferably A/B>3.0.

5. Cemented carbide tool according to any of the preceding claims **characterized in that** the surface portion is up to 2000 µm thick, preferably 5-1200 µm, more preferably 10-800 µm, most preferably 10-300 µm.

6. Cemented carbide tool according to any of the preceding claims **characterized in that** the composition of the cemented carbide is WC+Co with a binder phase content >1.5 wt-%, preferably >5 wt-%, but <25 wt-%, preferably <15 wt-%.

7. Cemented carbide tool according to any of claims 1-5 **characterized in that** the composition of the cemented carbide is WC+Co with a binder phase content >1.5 wt-%, preferably >5 wt-%, but <25 wt-%, preferably <15 wt-%, and a gamma -phase content of 0-30, preferably 0.2-16 vol-%.

8. Cemented carbide tool according to any of the preceding claims **characterized in that** the tool is a cutting tool insert.

9. Cemented carbide tool according to any of claims 1-7 **characterized in that** the tool is a coldforming tool.

10. Cemented carbide tool according to any of the preceding claims **characterized in** comprising a wear resistant coating.

11. Method of making a cemented carbide tool according to any of the preceding claims including the following steps:
- providing a compact of cemented carbide from a single powder;
- possibly presintering the compact and grind it to desired shape and size;
- placing a powder of grain refiner containing carbon and/or nitrogen on at least one portion of the exposed surface of the compact/presintered blank, preferably containing Cr;
- sintering the compact/presintered blank and grain refiner powder so as to diffuse the grain refiner toward the center of the body thereby forming a surface zone inwardly from the exposed surface on which the grain refiner was placed, and forming an interior zone;
- possibly adding an isostatic gas pressure during the final stage of sintering to obtain a dense body;
- possibly post-HIP-ing at a temperature lower than the sintering temperature and at a pressure of 1-100 MPa;
- possibly grinding to final shape;
- possibly depositing a wear resistant coating;
- **characterized in that** said sintering is performed for time such to obtain a dense body with a surface portion with a smaller grain size and lower cobalt content than those in the interior portion.

## Patentansprüche

1. Hartmetallwerkzeug für die spanende Metallbearbeitung oder die Metallumformung, welches harte Bestandteile aus Wolframcarbid (WC) in einer Binderphase aus Co und/oder Ni umfaßt und wenigstens einen Oberflächenanteil und einen inneren Anteil aufweist, wobei
die Korngröße der harten Bestandteile aus WC in dem Oberflächenanteil geringer ist als in dem inneren Anteil,
der Binderphasengehalt in dem Oberflächenanteil niedriger ist als in dem inneren Anteil und
der Chromgehalt in dem Oberflächenanteil höher ist als in dem inneren Anteil.

2. Hartmetallwerkzeug nach einem der vorangegangenen Ansprüche, **dadurch gekennzeichnet, daß** der Binderphasengehalt des Oberflächenanteils <1, vorzugsweise <0,92, besonders bevorzugt <0,85 von demjenigen in dem inneren Anteil ist.

3. Hartmetallwerkzeug nach einem der vorangegangenen Ansprüche, **dadurch gekennzeichnet, daß** die WC-Korngröße des Oberflächenanteils <1, vorzugsweise <0,9, besonders bevorzugt <0,8 von demjenigen in dem inneren Anteil ist.

4. Hartmetallwerkzeug nach einem der vorangegangenen Ansprüche, **dadurch gekennzeichnet, daß** der Oberflächenanteil Cr enthält, so daß das Verhältnis zwischen dem Parameter A = ((Gew.-% Cr/Gew.-% Binderphase) + 0,01) in dem Oberflächenanteil und dem Parameter B = ((Gew.-% Cr/Gew.% Binderphase) + 0,01), entnommen an dem Teil des Körpers, der durch den geringsten Cr-Gehalt **gekennzeichnet** ist, A/B >1,5, vorzugsweise A/B >3,0 ist.

5. Hartmetallwerkzeug nach einem der vorangegangenen Ansprüche, **dadurch gekennzeichnet, daß** der Oberflächenanteil bis zu 2000 µm, vorzugsweise 5-1200 µm, bevorzugter 10-800 µm, besonders bevorzugt 10-300 µm dick ist.

6. Hartmetallwerkzeug nach einem der vorangegangenen Ansprüche, **dadurch gekennzeichnet, daß** die Zusammensetzung des Hartmetalls WC+Co mit einem Binderphasengehalt >1,5 Gew.-%, vorzugsweise >5 Gew.-%, aber <25 Gew.-%, vorzugsweise <15 Gew.-%, ist.

7. Hartmetallwerkzeug nach einem der Ansprüche 1 bis 5, **dadurch gekennzeichnet, daß** die Zusammensetzung des Hartmetalls WC+Co mit einem Binderphasengehalt >1,5 Gew.-%, vorzugsweise >5 Gew.-%, aber <25 Gew.%, vorzugsweise <15 Gew.-%, und mit einem Gamma-Phasengehalt von 0-30, vorzugsweise 0,2-16 Vol.-% ist.

8. Hartmetallwerkzeug nach einem der vorangegangenen Ansprüche, **dadurch gekennzeichnet, daß** das Werkzeug ein Schneidwerkzeugeinsatz ist.

9. Hartmetallwerkzeug nach einem der Ansprüche 1 bis 7, **dadurch gekennzeichnet, daß** das Werkzeug ein Kaltformungswerkzeug ist.

10. Hartmetallwerkzeug nach einem der vorangegangenen Ansprüche, **dadurch gekennzeichnet, daß** es eine verschleißbeständige Beschichtung aufweist.

11. Verfahren zur Herstellung eines Hartmetallwerkzeuges nach einem der vorangegangenen Ansprüche mit den nachfolgenden Stufen:
- Bereitstellen eines Preßkörpers aus Hartmetall aus einem einzelnen Pulver;
- gegebenenfalls Vorsintern des Preßkörpers und Schleifen desselben zu einer gewünschten Form und Größe;
- Plazieren eines Pulvers aus Kornverfeinerer, welcher Kohlenstoff und/oder Stickstoff enthält, auf wenigstens einem Anteil der freiliegenden Oberfläche des Preßkörpers/vorgesinterten Rohlings, vorzugweise Cr enthaltend;
- Sintern des Preßkörpers/vorgesinterten Rohlings und des Kornverfeinererpulvers, so daß der Kornverfeinerer in Richtung der Mitte des Körpers diffundiert, wobei von der freiliegenden Oberfläche aus, auf der der Kornverfeinerer plaziert war, nach innen eine Oberflächenzone gebildet wird und eine innere Zone gebildet wird;
- gegebenenfalls Aufgeben eines isostatischen Gasdrucks während der finalen Sinterstufe, um einen dichten Körper zu erhalten;
- gegebenenfalls nachträgliche HIP-Behandlung bei einer Temperatur unterhalb der Sintertemperatur und bei einem Druck von 1-100 MPa;
- gegebenenfalls Schleifen zu einer endgültigen Form;
- gegebenenfalls Abscheiden einer verschleißbeständigen Beschichtung;
- **gekennzeichnet dadurch, daß** das Sintern für einen solchen Zeitraum durchgeführt wird, daß ein dichter Körper mit einem Oberflächenanteil mit einer kleineren Korngröße und einem geringeren Kobaltgehalt als in dem inneren Anteil erhalten wird.

## Revendications

1. Outil en carbure cémenté pour la coupe de métal ou le formage de métal comprenant des constituants durs de carbure de tungstène (WC) dans une phase liante de Co et/ou Ni et ayant au moins une portion de surface et une portion d'intérieur dans lequel
dans la portion de surface, la taille de grain des constituants durs de WC est plus petite que celle dans la portion d'intérieur,
dans la portion de surface, la teneur en phase liante est inférieure à celle dans la portion d'intérieur, et
dans la portion de surface, la teneur en chrome est supérieure à celle dans la portion d'intérieur.

2. Outil de carbure cémenté selon la revendication précédente, **caractérisé en ce que** la teneur en phase liante de la portion de surface est < 1, de préférence < 0,92 et encore plus de préférence < 0,85 de celle dans la portion d'intérieur.

3. Outil de carbure cémenté selon l'une quelconque des revendications précédentes, **caractérisé en ce que** la taille de grain de WC de la portion de surface est < 1, de préférence < 0,9 et encore plus de préférence < 0,8 de celle de la portion d'intérieur.

4. Outil de carbure cémenté selon l'une quelconque des revendications précédentes, **caractérisé en ce que** la portion de surface contient du Cr, de sorte que le rapport, entre le paramètre A=((% en poids de Cr/% en poids de phase liante)+0,01) dans la portion de surface et le paramètre B=((% en poids de Cr/% en poids de phase liante)+0,01) pris à la partie du corps qui est **caractérisée par** la plus faible teneur en Cr, soit A/B > 1,5, de préférence A/B > 3,0.

5. Outil de carbure cémenté selon l'une quelconque des revendications précédentes, **caractérisé en ce que** la portion de surface a une épaisseur allant jusqu'à 2000 µm, de préférence 5-1200 µm, encore plus de préférence 10-800 µm, et avec le plus de préférence 10-300 µm.

6. Outil de carbure cémenté selon l'une quelconque des revendications précédentes, **caractérisé en ce que** la composition du carbure cémenté est WC+Co avec une teneur en phase liante > 1,5 % en poids, de préférence > 5 % en poids, mais < 25 % en poids, de préférence < 15 % en poids.

7. Outil de carbure cémenté selon l'une quelconque des revendications 1 à 5, **caractérisé en ce que** la composition du carbure cémenté est WC+Co avec une teneur en phase liante > 1,5 % en poids, de préférence > 5 % en poids, mais < 25 % en poids, de préférence < 15 % en poids, et une teneur en phase gamma de 0-30, de préférence 0,2-16 % en volume.

8. Outil de carbure cémenté selon l'une quelconque des revendications précédentes, **caractérisé en ce que** l'outil est un insert d'outil de coupe.

9. Outil de carbure cémenté selon l'une quelconque des revendications 1-7, **caractérisé en ce que** l'outil est un outil de formage à froid.

10. Outil de carbure cémenté selon l'une quelconque des revendications précédentes, **caractérisé en ce qu'**il comprend un revêtement résistant à l'usure.

11. Procédé de fabrication d'un outil de carbure cémenté selon l'une quelconque des revendications précédentes comprenant les étapes consistant à :
- fournir un comprimé de carbure cémenté à partir d'une poudre unique ;
- éventuellement pré-fritter le comprimé et le meuler aux forme et taille souhaitées ;
- placer une poudre de produit d'affinage du grain contenant du carbone et/ou de l'azote sur au moins une portion de la surface exposée du comprimé/ébauche pré-frittée, contenant de préférence du Cr ;
- fritter le comprimé/ébauche pré-frittée et la poudre de produit d'affinage du grain de manière à diffuser le produit d'affinage du grain vers le centre du corps, ce qui forme une zone de surface vers l'intérieur à partir de la surface exposée sur laquelle le produit d'affinage du grain a été placé, et forme une zone d'intérieur ;
- éventuellement ajouter une pression de gaz isostatique au cours de l'étape finale de frittage pour obtenir un corps dense ;
- éventuellement effectuer une post-compression isostatique à chaud à une température inférieure à la température de frittage et à une pression de 1-100 MPa ;
- éventuellement meuler à la forme finale ;
- éventuellement déposer un revêtement résistant à l'usure ;
- **caractérisé en ce que** ledit frittage est effectué sur une durée permettant d'obtenir un corps dense avec une portion de surface à taille de grain et à teneur en cobalt qui sont inférieures à celles dans la portion d'intérieur.
